# EUROPEAN PATENT APPLICATION

(11) **EP 4 534 486 A1**
(43) Date of publication of application: **09.04.2025**
(21) Application number: 23201442.3
(22) Date of filing: 03.10.2023
(51) Int. Cl.: C02F 1/00, B01D 61/02, B01D 61/08, C02F 1/44, C02F 1/68

(54) **SYSTEM AND METHOD FOR MINERALIZING WATER**

(71) Applicant: Bluewater Innovations AB, 114 26 Stockholm (SE)
(72) Inventor: RITTRI, Bengt, 11426 Stockholm (SE); ALBIZ, Philippe, 11426 Stockholm (SE)
(74) Representative: AWA Sweden AB

(57) **Abstract**

There is provided a system (100) configured to deliver mineralized water. The system comprising a tap (110) configured to deliver water from a water source (120) to a user. The system further comprises at least one dosing pump (130) upstream of said tap (110) configured to introduce liquid mineral concentrate (140) into the water flow (150) to the tap (110). The system further comprises a control unit arranged to control said dosing pump. Said at least one dosing pump (130) is configured to introduce a pre-defined dose of liquid mineral concentrate (140) into said water flow (150) and wherein a mineralization state of the water flow (130) is actively affected according to the pre-defined dose of liquid mineral concentrate (140) introduced into the waterflow (150) by said at least one dosing pump (130). Said control unit (160) is further configured to control said dosing pump (130) to regulate said mineralization state of said water flow (150). Further, a method using the system is provided.

## Description

### Technical field

The invention belongs to the technical field of water mineralization. More specifically, the present invention belongs to the technical field of delivering mineralized water to a user.

### Background

In the realm of water treatment, the removal of impurities and compounds which may otherwise adversly affect the health of living organisms is paramount. One method of water treatment, namely reverse osmosis, is increasingly widespread and utilized throughout human society. However, water purified by reverse osmosis, while efficiently being purified of contaminants detrimental to health, is also stripped of other compounds, such as essential minerals. Thereof, the water resulting from reverse osmosis treatment often lacks essential minerals, such as sodium, calcium and magnesium, which in turn are vital for human health. Essential minerals contribute to strong teeth and bones, healthy hair and skin, the growth and development of the body, and optimal neurological functioning. Furthermore, RO-(reverse osmosis) treated water is both low in pH and considered to be less palatable than water with a higher pH and comprising a mineral content.

While awareness today with regard to the toxicity levels of contaminants within water is relatively high, the same focus has not been applied to the beneficial health aspects of certain essential minerals in water. Given that the bioavailability of calcium and magnesium in water is comparable to that of other foods, the consumption of water can contribute to the daily intake of these minerals. Therefore, including water comprising minerals in the diet may be a suitable way of complementing calcium and magnesium intake, and thereof complying with the daily dietetic recommendations of these nutrients.

Utilizing reverse osmosis to purify water of contaminants detrimental to health is only the first step. Reintroducing essential minerals is a necessary second step to ensure healthy and palatable water. Processes for mineralizing purified water are known in the art, such as incorporating passive mineral filters to water purification systems, or the end-user manually adding liquid mineral drops to a glass of water.

However, the solutions proposed by prior art are lacking in reproducable results, efficiency, control and user-friendliness. Passive mineral filters are impracticle and do not give the user any control over the mineralization state of the purified water being delivered by the system. A user manually adding liquid mineral drops to a glass of water is time consuming, messy, does not deliver reproducable results and is not an efficient method for mineralizing drinking water. Therefore, there is a clear need for improvements to existing systems and methods for delivering mineralized water.

### Disclosure of the invention

Thus, it is an object of the present disclosure to alleviate at least some of the drawbacks associated the prior art. In particular, there is an object to provide a system configured to efficiently deliver mineralized water to a user such that the mineralization state of the water flow has been actively, efficiently and precisely regulated and is beneficial to the health of the user. Another object is to provide a method for actively regulating a mineralization state of a water flow utilizing said system. Other objects will become obvious in the following.

The present invention is based on the realization that the mineralization state of a water flow delivered to a user via a tap, can be actively, efficiently and precisely regulated through the use of a system designed to deliver mineralized water to a user as described herein or a method employing such a system.

According to a first aspect of the present disclosure, there is provided a system configured to deliver mineralized water. The system comprising a tap configured to deliver water from a water source to a user. The system further comprises at least one dosing pump upstream of said tap configured to introduce liquid mineral concentrate into the water flow to the tap. The system further comprises a control unit arranged to control said dosing pump. Said at least one dosing pump is configured to introduce a pre-defined dose of liquid mineral concentrate into said water flow and wherein a mineralization state of the water flow is actively affected according to the pre-defined dose of liquid mineral concentrate introduced into the water flow by said at least one dosing pump. Said control unit is further configured to control said dosing pump to regulate said mineralization state of said water flow.

According to a second aspect of the present disclosure, there is provided a method for regulating a mineralization state of a water flow using a system according to the first aspect of the present disclosure. The method comprising the following steps: (a) receiving a water flow from a water source. The method further comprises (b) controlling a dosing pump, to add a pre-defined dose of liquid mineral concentrate to said water flow, thereby actively affecting the mineralization state of said water flow. The method further comprises (c) delivering the water flow with an actively affected mineralization state to a tap. And the method further comprises (d) delivering the water flow with an actively affected mineralization state from said tap to a user.

Thus, the present invention is based on the idea of providing a way to deliver mineralized water to a user wherein the mineralization state of a water flow has been actively affected, and is easily controllable and adjustable by a user. The invention brings many advantages. A first advantage is that it can be installed within an already existing tap system, this allows for a more user-friendly experience and reduces installation burden. The present invention is therefore advantageous in that there is no need for fitting a separate tap system, as the mineralized water can be delivered using the existing tap system. Further, having the possibility to at will change between water of various mineralization states is beneficial in that the user can easily access precisely the type of water they are in need of. For example, some activities do not require a water flow wherein the mineralization state has been actively affected, they can be activities where the user requires an unmodified tap water from a water source. Other activities can require a water flow wherein the mineralization state of the water has been regulated or actively affected to a specific mineral composition. The user is therein able to quickly and easily switch between water flows with varying mineralization states while utilizing the same tap to have said water flows delivered to said user.

By "tap" is herein meant a device having some type of spout and a valve, being attached to an end of a pipe to control the flow of a fluid. Thus, the tap may be a faucet, a mixer tap, kitchen tap, or a tap providing a controlled connection between a pipe and a second pipe or tube, for example one leading to a coffee maker, a device for delivering sparkling water, a device for delivering juice, etc.

The system and method according to the first and second aspect of the invention involves actively affecting a mineralization state of a water flow, resulting in a water flow comprising the desired composition of minerals, or mineralization state, as well as suitable pH and hardness, delivered to a user. As used herein, the term "mineralization state" or "mineral composition" denotes the current state or composition of a mineral content of a water flow. The mineralization state of a water flow may be a mineralization state wherein said water flow comprises minerals. "Minerals" is to be understood as elements, ions and compounds which can be comprised in a water flow such as calcium, magnesium, boron, chloride, chromium, cobalt, copper, fluoride, iodine, iron, lithium, manganese, molybdenum, phosphate, rubidium, selenium, silicon, sodium, vanadium, and zinc. The mineralization state of a water flow may be a mineralization state wherein said water flow contains no minerals at all. The term "actively affecting" a mineralization state of a water flow as used in the present invention refers to an action which actively affects the mineralization state of a water. For example, said action could be a process for adding a pre-defined dose of a selected mineral or minerals comprised in a liquid mineral concentrate to a water flow containing no minerals at all, or minerals in an insufficient or low amount to be considered palatable or healthy. Said action of adding a pre-defined dose of liquid mineral concentrate to a water flow actively affects the mineralization state of the water, as the mineralization state of the water flow was a first state before the action and after the action the water flow has a second mineralization state, different from the first state. Therein, "actively affecting" a mineralization state of a water flow as used in the present invention may refer to the active restoration of minerals to a water flow not containing minerals at all, or in an insufficient amount, in order to obtain a water flow that has a different mineralization state when compared to the preceding water flow not containing minerals at all, or in an insufficient amount, therein providing a more palatable water flow to said user. It is important to differentiate between "actively affecting" and "passively affecting" a mineralization state of a water flow. "Passively affecting" a mineralization state is to be understood as a passive action, one that occurs without any outside input and/or action. A "passively affected mineralization state of a water flow" is not entirely predictable nor is it controllable. A user receiving a water flow from a tap which is part of a system which "passively affects mineralization state of a water flow" cannot choose the mineralization state of the delivered water flow. Therein, a user receiving a water flow from such a system cannot actively affect or actively choose or influence the concentration or dosage of minerals in the water flow. In contrast to this, and as explained above, "actively affecting" a mineralization state of a water flow is to be understood as an active action, one that occurs with outside input and/or action. An "actively affected mineralization state of a water flow" is both predictable and/or controllable. An actively affected mineralization state can therein be achieved by the inventive system as described herein.

The system and method according to the first and second aspect of the invention involves a pre-defined dose of liquid mineral concentrate. As used herein, the term "pre-defined dose" of liquid mineral concentrate denotes a specific volume of liquid mineral concentrate. The pre-defined dose may be defined as a dose to achieve a certain concentration of minerals in a defined volume of water, for example a liter. The composition of the liquid mineral concentrate may be one mineral type or it may be more than one mineral type. Said mineral composition of the liquid mineral concentrate may comprise several mineral types, such as two, three, four, five, six, seven, eight, nine, ten, fifteen or twenty different mineral types. Said liquid mineral concentrate may have any concentration, as long as the concentration of the liquid mineral concentrate allows the liquid mineral concentrate to be utilized in a system or a method utilizing said system as described herein. In alignment with what has been discussed previously, said liquid mineral concentrate comprises minerals. And the "minerals" in the liquid mineral concentrate is to be understood as elements, ions and compounds which can be comprised in a water flow such as at least calcium, magnesium, boron, chloride, chromium, cobalt, copper, fluoride, iodine, iron, lithium, manganese, molybdenum, phosphate, rubidium, selenium, silicon, sodium, vanadium, and zinc. Said liquid mineral concentrate may comprise other elements, compounds or ions other than the abovementioned. Said liquid mineral concentrate may comprise elements which contribute to one or several of the following: preservation of the concentrate, flavor of the concentrate, color of the concentrate, viscosity of the concentrate, or any other physical or chemical characteristic of the liquid mineral concentrate.

The water flow whose mineralization state is actively affected may have been subjected to a treatment or purification process prior to having its mineralization state actively affected. Thereof, according to an embodiment of the first aspect of the invention, there is provided a system as described herein, further comprising a water purifier arranged upstream of said tap, said water purifier configured to purify said water flow. However, in principle, the water flow used could also not have been subjected to a treatment or purification process but may be natural water which does not comprise an adequate mineralization state so as to be beneficial to a user's health. Nevertheless, the invention disclosed may be used with any water purification system and may also be used with future enhanced versions of already commercially available water purifiers. The present embodiment is advantageous as water purifiers or water treatment systems are important for delivering a drinkable water flow from water sources with undrinkable water, such as for example seawater, lakes or contaminated wells. An example of a water purification system that may be used with the invention is a system based on reverse osmosis (RO).

According to a further embodiment, there is provided a system as described herein, wherein said water purifier is configured to purify said water flow through reverse osmosis (RO). RO is a water treatment method traditionally known for removing salt from seawater, it is also used to purify drinking water by forcing untreated water molecules through a semi-permeable filter membrane. The filter membrane blocks contaminants and the impurities are subsequently expelled from the environment. RO is a process where a weaker saline solution will tend to migrate to a strong saline solution; that is, a solution that is less concentrated will have a natural tendency to migrate to a solution with a higher concentration. Reverse osmosis occurs when the solution is moved across a filter membrane against the concentration gradient, from lower concentration to higher concentration. The present embodiment is advantageous as utilizing RO for water treatment may have multiple benefits including getting pure, clean drinking water, removal of unwanted odors or tastes. Other types of water treatment systems may be used together with the invention. The end goal of the water treatment systems used with the invention may be to produce and deliver drinkable water. But it may also be to treat water for use in certain other purposes including medical, pharmacological, chemical, industrial applications or any commercial application.

In a further embodiment of the first aspect of the invention, there is provided a system as described herein, wherein said water purifier is arranged downstream from the water source and upstream of said at least one dosing pump. The present embodiment is advantageous as situating the water purifier downstream of the water source and upstream of the at least one dosing pump provides the user the possibility of actively affecting a mineralization state of multiple "types" of water flows. By multiple "types" it is meant that the water comprised in the water flow may be unpurified water straight from a water source, therein having the same mineralization state and same purification state as the water source itself. It is also meant that the water comprised in the water flow may be purified water which originates from the water source, but has been led through a piping system through to a water purifier located downstream of the water source and upstream of the at least one dosing pump. This water flow, which has been routed through a water purifier, will have a different purification state and potentially a different mineralization state when compared to the water originating from the water source. A further advantage of the present embodiment therein presents itself, as the system allows for the mineralization state of either type of water flow, purified or unpurified, to be actively affected, depending on how the system has been configured. This provides the user of the system with great flexibility and a precise control over the mineralization state of both purified and unpurified water flows.

The system and method according to the first and second aspect of the invention involves a purification state. By "purification state" it is here meant if the water has passed through a water purifier or water treatment system or not. If it has passed through a water purifier or water treatment system it can be considered to have one specific purification state, if it has not it can be considered to have a different purification state.

The system and method according to the first and second aspect of the invention involves a purified water flow. By "purified water flow" it is here meant a water flow that has passed through a water purifier or water treatment system in order to cleanse, rinse, or treat the water in a way so that it is drinkable, or useable for certain purposes including for example medical, pharmacological, chemical, industrial applications or any commercial applications.

The system and method according to the first and second aspect of the invention further involves an unpurified water flow. By "unpurified water flow" it is here meant a water flow from a water source that has not passed through a water purifier or gone through a water treatment so that it is drinkable, or useable for certain purposes including for example medical, pharmacological, chemical, industrial applications or any commercial applications.

According to another further embodiment of the first aspect of the invention, there is provided a system as described herein, further comprising a user interface configured to activate the dosing pump and the introduction of the liquid mineral concentrate into the water flow. The present embodiment is advantageous in that a user interface can provide means for the system to communicate with the user. Information which could be communicated to a user by a user interface could be communication related to the use of the system. Such information could be warnings, reminders, prompts, instructions or the like. Furthermore, the user interface can provide means for the user to interact with the system. Information which could be communicated to the control unit via the user interface could be information related to the use of the system. Such information could be instructions from the user, selections from the user, commands from the user, or the like. For example, the user interface may be configured such that the user is presented with means to be able to select which type of water flow they desire to be delivered from the tap, such as a purified water flow or an unpurified water flow. Furthermore, the user interface may also or alternatively be configured such that the user is presented with means to be able to affect a mineralization state of the water flow to be delivered from the tap. This could be achieved by the user interface being configured according to the embodiment as described above. This would result in the user, via a command or request or selection via the user interface, to actively affect the mineralization state of a water flow. Therein, the user is presented with means to be able to select which type of water flow they desire to be delivered from the tap, such as a water flow with an actively affected mineralization state or a water flow without an actively affected mineralization state. The user interface does not need to be connected to the control unit, the dosing pump or the system via cables. Thus, the user interface may for example be placed on a sink or stuck to a wall or other surface for easy access by the user.

According to another embodiment of the first aspect of the invention, there is provided a system as described herein, wherein said control unit is further configured to, based on a user input via the user interface, control the pre-defined dose of the liquid mineral concentrate to be introduced into said water flow by said dosing pump. The present embodiment is advantageous as the user, via the user interface, can actively control the pre-defined dose of liquid mineral concentrate introduced into the water flow and therein deliver water flows comprising various mineralization states. In other words, via the user interface, the user can choose to increase or decrease a pre-defined dose of liquid mineral concentrate to be introduced into the water flow by said dosing pump. This possibility, available to the user thanks to the inventive design of the system, has several advantages over the prior art. For example, passive mineral filters in the prior art cannot deliver variable doses of minerals upon request by the user. Passive mineral filters of the prior art deliver one type or one composition of mineral(s) at one specific dose which cannot be affected by the user. Furthermore, an inherent feature of a filter is that they also wear down over time, therein delivering a fluctuating dosage of minerals to the water flow, steadily declining with use until the mineral filter is spent. The water flow that is mineralized by a passive mineral filter at the end of the filter's lifespan will therein have a different mineral dose than the water flow which was mineralized by the mineral filter at the beginning of the filter's lifespan. This leads to uncertainty as to the actual mineralization state of the water being delivered to the user. Furthermore, the system also has several advantages over the prior art method of mineralizing water by the user manually adding liquid mineral concentrate droplets from a pipette or pouring liquid mineral concentrate into a glass or flask of water. Manually adding drops or a volume of liquid mineral concentrate is a method which leads to very variable results. The mineralization state of the water is not entirely known as the user can apply different sized droplets of liquid mineral concentrate to the water depending on how they handle the pipette or how the user measures and adds the liquid mineral concentrate to the glass or flask of water. Furthermore, this method is not efficient nor user-friendly as it is time consuming and requires dexterity and focus from the user. This prior art method is cumbersome and does not allow the user to participate in other activities while the water flow's mineralization state is being affected. The current embodiment is advantageous as it allows for the user to engage in other activities while being provided with mineralized water, this might be advantageous in a restaurant, industrial or commercial environment. Furthermore, the current embodiment is also advantageous as it removes any manual measuring and manual application steps from the user and integrates these steps into the system. This in turn also makes the system available for persons whose physical dexterity is hindered by a physical disability, by age, and/or other physical or mental variations which prevents the user from operating a pipette or measuring small droplets into a glass or flask of water. Furthermore, as explained previously, said user interface may be configured such that the user is presented with means to be able to select which type of water flow they desire to be delivered from the tap, such as a water flow with an actively affected mineralization state or a water flow without an actively affected mineralization state. The present embodiment is advantageous as it provides the user with further possibilities to customize the water flow which is delivered to the tap.

According to another embodiment of the first aspect of the invention, there is provided a system as described herein, further comprising a measuring element configured to measure a volume of water delivered by said tap to said user. The measuring element measures the volume of water that is delivered through the tap to the user, and may for example, be a flow meter. The flow meter may thus measure the volume of water per time unit that passes through the tap. The measuring element may be arranged upstream the dosing pump, such that the water flow is measured before the liquid mineral concentrate is added to the water flow. The present embodiment is advantageous in that the measuring element is connected to the control unit such that the control unit receives information about the flow rate of the water flow. Therein the system is configured to be able to accurately track water flow rate and therein water flow volume.

According to another embodiment of the first aspect of the invention, there is provided a system as described herein, wherein said control unit is further configured to, based on at least the information from the measuring element, inform said user of said mineralization state of said water flow. This embodiment is advantageous in that the user can be informed of the current mineralization state of the water flow when the tap is opened and the water flow is delivered to the user. It can be advantageous for the user to know what type of water they are being delivered through the tap. For example, if a user is using the system and tap to retrieve water, the user may open the tap, let the water flow out from the tap for a certain time interval, to perform the desired actions while the water is running from the tap. For example, filling a container with a desired amount of water, doing dishes, washing hands, etc. When the user is finished, the user closes the tap again. Conventional type taps usually has some type of backflow retention, meaning that as a result of the tap being closed, there will be remaining water in the pipes leading to the tap in the piping system. If the user chose to retrieve a water flow with a first mineralization state (such as a water flow without an actively affected mineralization state, i.e. no liquid mineral concentrate has been added to the water flow), the remaining water in the piping system will thus be of the same first mineralization state. If the user opens the tap again, but this time chooses to, via the user interface, retrieve a water flow with a second mineralization state (such as a water flow with an actively affected mineralization state, i.e. a pre-determined dose of liquid mineral concentrate has been added to the water flow), the system will not be able to deliver the water flow with a second mineralization state right away, since the remaining water in the piping system, from the previous use and comprising a first mineralization state, has to be delivered through the tap first. To mitigate this problem, the measuring element together with the user interface may be utilized. The control unit controls the user interface to indicate a first mineralization state of the water flow. The control unit further calculates, based on the information from the measuring element, when a volume of water has passed the tap that is equal to the fixed volume of the pipe between the measuring element and the tap. When the desired volume of water has passed the tap, the control unit controls the user interface to indicate that the tap delivers a water flow with a second mineralization state, i.e. water wherein a pre-determined dose of liquid mineral concentrate has been added to the water flow. The remaining water in the piping system has thus passed the tap, and new, mineralized water comprising the second mineralization state is delivered to the user. There may thus be a time delay until the water flow delivered by the tap only comprises water with the desired second mineralization state. The control unit may thus be configured to, via the user interface, inform the user of when this time delay has passed, i.e. when the water flow only comprises water in the desired second mineralization state.

According to another embodiment of the first aspect of the invention, there is provided a system as described herein, wherein said control unit is further configured to, based on at least the information from the measuring element, inform said user of a purification state of said water flow. This embodiment is advantageous in the same manner as the previous embodiment, but wherein the user is informed of a purification state of the delivered water flow. It can be advantageous for the user to know what type of water they are being delivered through the tap.

According to another embodiment of the first aspect of the invention, there is provided a system as described herein, wherein said user interface further comprises indicating means to inform the user that a mineralization state of the water flow has been regulated. The present embodiment is advantageous in that a user can be informed by the user interface when a water flow comprising a desired mineralization state is being delivered through the tap to the user. A user may be informed by any conventional way, the user interface may for example change color, send out a sound alerting the user audially, inform via a physical alert such as a vibration or display a message, image or infographic which can be viewed by the user.

According to another embodiment of the first aspect of the invention, there is provided a system as described herein, wherein the liquid mineral concentrate is stored in at least one container, and wherein the control unit is further configured to inform said user via the user interface when said at least one container needs refilling. The present embodiment is advantageous as the user can be informed when the at least one container comprising the liquid mineral concentrate is nearing empty and needs refilling. This information may simplify servicing and maintenance of the system. In another example, said at least one container is a plurality of containers, such as two containers, or three containers, or four containers, or five containers, or ten containers, or twenty containers. In a further example, said liquid mineral concentrate stored in said plurality of containers is the same liquid mineral concentrate. In another further example, said liquid mineral concentrate stored in said plurality of containers is different mineral concentrates, such as different compositions and/or different concentrations. In this way, the user may not only set a pre-defined dose of liquid mineral concentrate via the user interface, but also choose between different liquid mineral concentrates. This is advantageous in applications where different users may desire different combinations of minerals, for example for personal health reasons or preference, or for example in a gym, restaurant, bar or other public places.

According to an embodiment of the second aspect of the invention, there is provided a method as described herein, further comprising a step after step a. and prior to step b., comprising a1. purifying the water flow through reverse osmosis. The present embodiment is advantageous as utilizing RO for water treatment may have multiple benefits including getting pure, clean drinking water, removal of unwanted odors or tastes. Other types of water treatment systems may be used together with the invention. The advantages of this embodiment are the same as those described for a related embodiment of the first aspect, and therefore will not be repeated in detail again.

According to another embodiment of the second aspect of the invention, there is provided a method as described herein, further comprising the step: e. receiving a user input via a user interface, wherein said user input comprises information about the pre-defined dose. The present embodiment is advantageous as the user, via the user interface, can actively control the pre-defined dose of liquid mineral concentrate introduced into the water flow and therein deliver water flows comprising various mineralization states. The advantages of this embodiment are the same as those described for a related embodiment of the first aspect, and therefore will not be repeated in detail again.

According to another embodiment of the second aspect of the invention, there is provided a method as described herein, further comprising the steps: f. measuring a volume of the water flow that passes through said tap to said user, and g. informing a user via a user interface of the mineralization state of said water flow. The present embodiment is advantageous in that the user can be informed of the current mineralization state of the water flow when the tap is opened and the water flow is delivered to the user. It can be advantageous for the user to know what type of water they are being delivered through the tap. The advantages of this embodiment are the same as those described for related embodiments of the first aspect, and therefore will not be repeated in detail again.

### Brief Description of the Drawings

Exemplifying embodiments will now be described in more detail, with reference to the following appended drawings:
Figure 1 schematically illustrates a system for delivering mineralized water according to an exemplifying embodiment of the present disclosure;
Figure 2 schematically illustrates a detailed view of a dosing pump according to an exemplifying embodiment of the present disclosure;
Figure 3 schematically illustrates a user interface according to an exemplifying embodiment of the present disclosure;
Figure 4 schematically illustrates a method for regulating a mineralization state of a water flow according to an embodiment of the present disclosure.

### Detailed Description

As illustrated in the figures, the size of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying figures, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

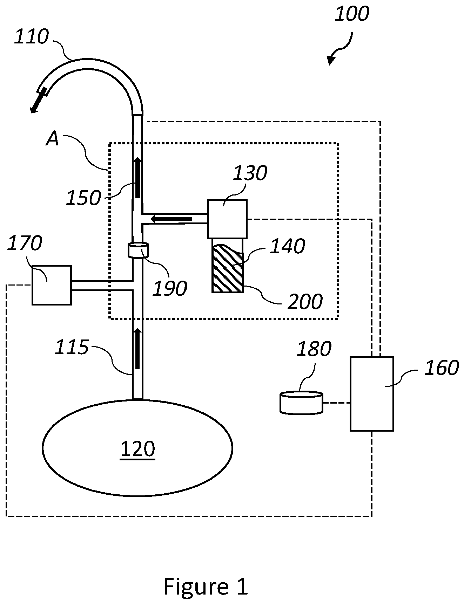

With reference to figure 1, a system 100 for delivering mineralized water according to an exemplifying embodiment of the present invention is shown. The system 100 comprises a tap 110 configured to deliver a flow of water 150 from a water source 120 to a user (not shown). The system 100 further comprises a dosing pump 130 upstream of the tap 110, configured to introduce a pre-defined dose of a liquid mineral concentrate 140 into the water flow 150 that is delivered to the tap 110. The pre-defined dose of liquid mineral concentrate 140 affects a mineralization state of the water flow 150. Further, the system 100 comprises a control unit 160 configured to control the dosing pump 130 to regulate the mineralization state of the water flow 150.

The water source 120 delivers water to the tap 110 via a piping system 115. The piping system 115 and the tap 110 may be of the conventional type, as may be found in a kitchen, restaurant, bar, gym, school building, or the like. The water flow 150 flows from the water source 120, which is the most upstream component, to the tap 110, which is the most downstream component of the system 100. The water flow 150 thus flows in the direction of the arrows, as depicted in figure 1.

The dosing pump 130 is connected to the liquid mineral concentrate 140 which is held in a container 200. Thus, the dosing pump is connected to the container 200 holding the liquid mineral concentrate 140. The dosing pump 130 may retrieve the liquid mineral concentrate 140 from the container 200 through a tube (not shown) or similar. The tube may extend from the dosing pump 130 to an inside of the container 200 where it gets inserted in the liquid mineral concentrate 140. The dosing pump 130 may thus draw in an amount of liquid mineral concentrate 140 through the tube and into the dosing pump 130. The dosing pump 130 may be driven by a drive unit (e.g. a motor) that may both cause the liquid mineral concentrate 140 to be drawn into the dosing pump 130 from the container 200, as well as pumping the liquid mineral concentrate 140 from the dosing pump 130 into the water flow 150. By controlling the drive unit of the dosing pump 130, an amount of liquid mineral concentrate 140 withdrawn from the container 200 may be controlled. The dosing pump 130 is controlled by the control unit 160 which may determine the pre-defined dose of liquid mineralization concentrate 140 and transmit this information to the dosing pump 130 which delivers this pre-defined dose into the water flow 150. The pre-defined dose may be defined as a dose to achieve a certain concentrate of minerals in a defined volume of water, for example a liter. Since the water flow 150 may flow continuously through the piping system 115, the dosing pump 130 may deliver the pre-determined dose of liquid mineral concentrate 140 in an interval. For example, a pre-defined dose may be delivered to the water flow 150 every 20 seconds, every minute, every 5 seconds, or similar, depending on the flow rate of the water, the chosen pre-defined dose, the size of the tap 110, etc. The pre-defined dose is delivered to the water flow 150 through a connection between the piping system 115 and the dosing pump 130. The connection may be a pipe or a tube integrated in the piping system 115, as shown in figure 1. The dosing pump 130 together with the container 200 and the liquid mineral concentrate 140 is an individual module that can be added onto an existing tap 110 or piping system 115 connected to a water source 120.

The dosing pump 130 may be connected to the control unit 160 via a cable (not shown). The dosing pump 130 may also be connected to the control unit 160 via wireless means, for example via a Bluetooth connection. The control unit 160 may be notified by the dosing pump 130 when the liquid mineral concentrate 140 held in the container 200 is near empty.

Further, the control unit 160 is connected to a user interface 180. The user interface 180 may be connected to the control unit 160 via a cable, or via wireless means, for example via Bluetooth. The user interface 180 is configured to receive a user input from a user in order to change the mineralization state of the water flow 150 delivered by the tap 110. The user may choose to start delivering mineralized water flow 150, to stop delivering mineralized water flow, or change the pre-defined dose of liquid mineral concentrate 140. The user input information is delivered to the control unit 160, which controls the dosing pump 130 to deliver a pre-defined dose of liquid mineral concentrate 140 to the water flow 150, to stop delivering a pre-defined dose of liquid mineral concentrate 140 to the water flow 150, or to change the pre-defined dose delivered to the water flow 150. The user may thus, via the user interface 180, set the pre-defined dose to be delivered in the water flow 150. The control unit 160 is further configured to inform the user about the mineralization state of the water flow 150, for example via indicating means (not shown). Further, the control unit 160 is configured to, via the user interface 180, to inform the user when the container 200 holding the liquid mineral concentrate 160 is near empty. This is advantageous since it enables the user to exchange or refill the liquid mineral concentrate 140 in the container 200 before it runs out.

The system 100 further comprises a water purifier 170, located upstream the tap 110 and the dosing pump 130 in the direction of the water flow 150. The water purifier 170 purifies the water flow 150 through reverse osmosis. The water purifier 170 may be connected or disconnected. When the water purifier 170 is connected, all water coming from the water source 120 flowing towards the tap 110 is led through the water purifier 170 where it is purified before it flows downstream the piping system 115 towards the tap 110 and is delivered to a user (not shown). When the water purifier 170 is disconnected, the water coming from the water source 120 is led through the piping system 115 to the tap 110 without passing through the water purifier 170. The connection/disconnection of the water purifier may be controlled by the control unit 160. The user interface 180 may, via information from the control unit 160, inform the user about a purification state of the water flow 150, i.e. if the water delivered by the tap 110 is purified or not. The control unit 160 may control a connection/disconnection of the water purifier 170 via a user input from the user interface 180. A user may via the user interface 180 choose if the water flow 150 should be purified or not. This is done by a user indicating via the user interface 180 a desire to retrieve purified water, whereby the control unit 160 controls the water purifier 170 to be connected to the water flow 150. Vice versa, the user may indicate via the user interface 180 a desire to not retrieve a purified water flow 150, whereby the control unit 160 controls the water purifier to be disconnected from the water flow 150. A user may indicate via the user interface 180 to both have a purified water flow 150 and a mineralized water flow 150. A user may also indicate via the user interface 180 to have a purified water flow 150 but not mineralized, or to have non-purified water but mineralized, etc.

The water purifier 170 may form a part of the system 100, but may also be an individual module that may be removed from the system 100. The purified water may further be delivered from outside of the system 100 and from any type of water purification system.

The system 100 further comprises a measuring element 190 arranged upstream the tap 110 and the dosing pump 130 along the water flow 150. Further, the measurement element 190 is arranged downstream the water purifier 170. The measuring element 190 measures the volume of water that is delivered through the tap 110 to a user (not shown), by measuring the water flow 150 in the piping system 115 flowing from the water source 120 and/or the water purifier 170. The measuring element 190 may be a flow meter. The flow meter may thus measure the volume of water per time unit that passes through the piping system 115, and ultimately through the tap 110. The measuring element 190 is connected to the control unit 160 such that the control unit 160 receives information about the flow rate of the water flow 150. The control unit 160 may, based on the information from the measuring element 190, calculate a volume of water from the flow rate value. The measurement element 190 may be arranged in a position upstream the tap 110 and the dosing pump 130 where the volume of the pipe leading from the measuring element 190 to the tap 110 is known. This fixed volume may be known by the control unit 160. The control unit 160 may thus compare a volume of water passing through the measurement element 190 with the known fixed volume. This is advantageous in applications where the user wants to alternate between mineralized water and non-mineralized water. For example, if a user is using the system 100 and tap 110 to retrieve water, the user may open the tap 110, let the water flow out from the tap 110 for a certain time interval, to perform the desired actions while the water is running from the tap 110. For example, filling a container with a desired amount of water, doing dishes, washing hands, etc. When the user is finished, the user closes the tap 110 again. Conventional type taps 110 usually has some type of backflow retention, meaning that as a result of the tap 110 being closed, there will be remaining water in the pipes leading to the tap 110 in the piping system 115. If the user chose to retrieve non-mineralized water, the remaining water in the piping system 115 will thus be non-mineralized. If the user opens the tap 110 again, but this time chooses to, via the user interface 180, retrieve mineralized water, the system 100 will not be able to deliver mineralized water right away, since the remaining water in the piping system 115 from the previous use has to be delivered through the tap 110 first. To mitigate this problem, the measuring element 190 together with the user interface 180 may be utilized. The control unit 160 controls the user interface 180 to indicate a mineralization state of the water flow 150. The control unit 160 further calculates, based on the information from the measuring element 190, when a volume of water has passed the tap 110 that is equal to the fixed volume of the pipe between the measuring element 190 and the tap 110. When the desired volume of water has passed the tap 110, the control unit 160 controls the user interface 180 to indicate that the tap 110 delivers mineralized water. The remaining water in the piping system 115 has thus passed the tap, and new, mineralized water is delivered to the user. There may thus be a time delay until the water flow 150 delivered by the tap 110 only comprises water with the desired mineralization state. The control unit 160 may thus be configured to, via the user interface 180, inform the user of when this time delay has passed, i.e. when the water flow 150 only comprises water in the desired mineralization state. In the case where the tap 110 is connected to a further pipe or tube, for example leading to a coffee maker or a device for delivering juice (not shown), the control unit 160 may be configured to calculate a further time delay for when the volume of water has passed not only the tap, but also the further pipe or tube leading to an open end thereof delivering the drink to the user.

The measuring element 190 may further be used to determine the dose of liquid mineral concentrate 140 to be delivered by the dosing pump 130. If a pre-defined dose of liquid mineral concentrate 140 is determined by a user via the user interface 180, the control unit 160 may utilize the information from the measuring element 190 to determine the amount of liquid mineral concentrate 140 needed to be added into the water flow 150 to achieve the pre-defined dose of liquid mineral concentrate 140 in the water delivered to the user. As mentioned, the pre-defined dose may be defined as a dose to achieve a certain concentration of minerals in a defined volume of water, for example a liter. To achieve this concentration, the control unit 160 may thus use the information from the measuring element 190 regarding a volume of the water flow to further control the dosing pump 130 to deliver an amount of liquid mineral concentrate 140 corresponding to the desired concentration of liquid minerals per defined volume of water.

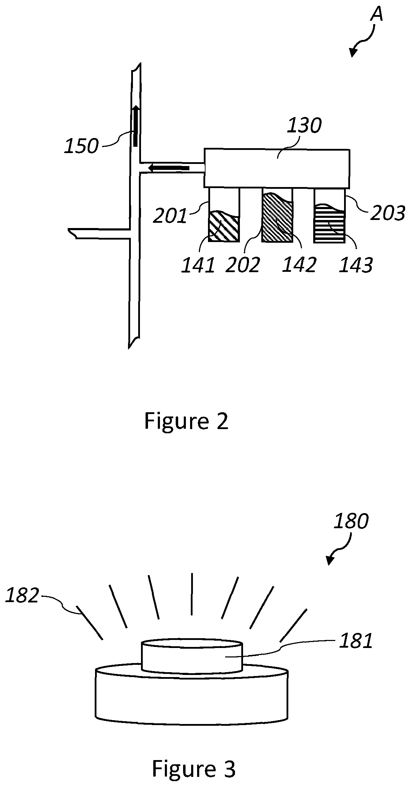

With reference to figure 2, a view of the parts contained by the dotted square referred to as 'A' in figure 1 is shown, schematically illustrating an alternative dosing pump 130 according to an exemplifying embodiment of the present disclosure. The dosing pump 130 may be connected to a plurality of containers 201, 202, 203 holding liquid mineral concentrate 141, 142, 143. The containers 201, 202, 203 may contain the same liquid mineral concentrates 141, 142, 143. The containers 201, 202, 203 may further contain different types of liquid mineral concentrates 141, 142, 143. In this way, the user may not only set a pre-defined dose of liquid mineral concentrate 140 via the user interface 180, but also choose between different liquid mineral concentrates 141, 142, 143. This is advantageous in applications where different users may desire different combinations of minerals, for example for personal health reasons or preference, or for example in a gym, restaurant, bar or other public places. The dosing pump 130 may be a single dosing pump driving all liquid mineral concentrates 141, 142, 143. The dosing pump 130 may also be three separate dosing pumps (not shown), one for each liquid mineral concentrate 141, 142, 143.

With reference to figure 3, a user interface 180 according to an exemplifying of the present disclosure is shown. The user interface 180 may have a button 181, as shown in the present figure, which the user may press to choose between different options, as discussed above. Further, the button 181 may be rotatable, such that the user may rotate the button 181 to increase or decrease the pre-defined dose of liquid mineral concentrate 140. The user interface 180 may further comprise indication means 182 to indicate information to the user. For example, the indication means 182 shown in the present figure is a type of light. The light 181 may be configured to change color, light intensity, or be flashing or pulsing with different time intervals depending on the chosen setting. For example, the light 181 may be one color when indicating that the water flow 150 is of a first mineralization state, f.ex. mineralized, and another color when indicating that the water flow 150 is of a second mineralization state, f.ex. not mineralized. The light 181 may have a separate color and/or lighting scheme (e.g. flashing, pulsing with different time intervals) for indicating if the water is purified, and another separate color and/or lighting scheme for indicating that the water is not purified. Further, the light 181 may be flashing, pulsing, or changing color(s) if the container 200 holding the liquid mineral concentrate 140 needs to be exchanged or refilled. Further, the light 181 may be flashing, pulsing, or changing color(s) during a time delay where the tap 110 is delivering a water flow 150 comprising a water flow of a first mineralization state, f.ex. non-mineralized water, when the user has chosen to have a water flow with a second mineralization state, f.ex. mineralized water, and for example where there is remaining water in the pipes after a previous use. Even further, if the water is both purified and of a certain mineralization state, f.ex. mineralized, the light 181 may have a separate color and/or lighting scheme (e.g. flashing, pulsing with different time intervals) for this setting. The user interface 180 may comprise further indication means in addition to the light 181. For example, the user interface 180 may comprise a display showing the currently chosen pre-defined dose of liquid mineral concentrate 140, or a message informing the user of a mineralization state of the water, and/or a purification state of the water. The user interface 180 may, as previously mentioned, have a wireless connection to the control unit 160. This means that the user interface 180 may be placed close to the tap 110, for example on a kitchen counter next to the tap 110. Since most conventional taps 110 are often installed above a cupboard or similar, where only the tap 110 is visible to the user, and the piping system 115, the dosing pump 130 and the water purifier 170 may be installed beneath a sink in the cupboard, having the user interface 180 close to the tap 110 is beneficial since the user does not have to go into the cupboard to find the user interface 180.

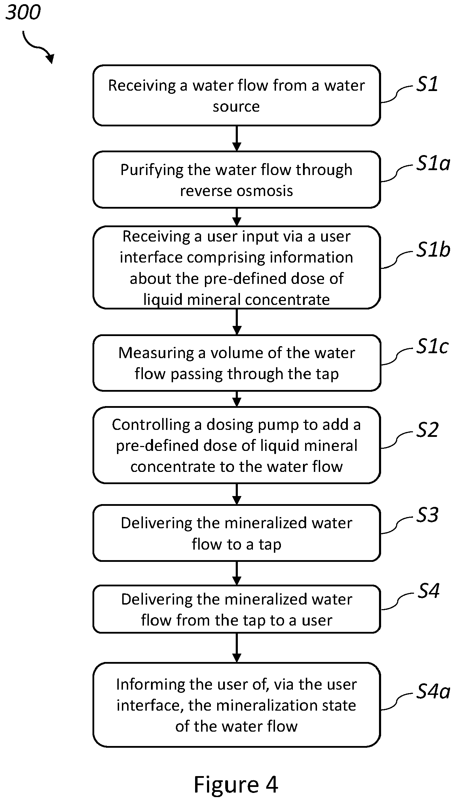

With reference to figure 4, a method 300 to mineralize water according to an embodiment of the present disclosure is shown. The method 300 shown in the present figure could for example be performed by the system 100 as shown in figure 1. In a step S1, a water flow 150 is received from a water source 120. In a step S1a, the water flow 150 is purified by flowing through the water purifier 170, for example, and being purified by reverse osmosis. In a step S1b, a user input is received via a user interface 180, the user input comprising information about the pre-defined dose of liquid mineral concentrate 140. The user input may thus be a setting of the pre-defined dose. In a step Slc, a volume of the water flow 150 passing through the tap 110 is measured, for example by a measuring element 190. In a step S2, a dosing pump 130 is controlled, via the control unit 160 for example, to add the pre-defined dose of liquid mineral concentrate 140 into the water flow 150. In a step S3, the water flow 150 comprising the added dose of liquid mineral concentrate 140, i.e. the mineralized water, is delivered to a tap 110. In a step S4, the mineralized water is delivered to a user from the tap 110. In a step S4a, the user is informed, via the user interface 180, of the mineralization state of the delivered water flow 150.

## Claims

1. A system (100) configured to deliver mineralized water, comprising a tap (110) configured to deliver water from a water source (120) to a user;
at least one dosing pump (130) upstream of said tap (110) configured to introduce liquid mineral concentrate (140) into the water flow (150) to the tap (110), and
a control unit arranged to control said dosing pump wherein,
said at least one dosing pump (130) is configured to introduce a pre-defined dose of liquid mineral concentrate (140) into said water flow (150) and wherein
a mineralization state of the water flow (130) is actively affected according to the pre-defined dose of liquid mineral concentrate (140) introduced into the waterflow (150) by said at least one dosing pump (130), and the control unit (160) configured to control said dosing pump (130) to regulate said mineralization state of said water flow (150).

2. The system according to claim 1, further comprising a water purifier (170) arranged upstream of said tap (110), said water purifier configured to purify said water flow (150).

3. The system according to claim 2, wherein said water purifier (170) is configured to purify said water flow (150) through reverse-osmosis.

4. The system according to claim 2 or 3, wherein said water purifier (170) is arranged downstream from the water source (120) and upstream of said at least one dosing pump (130).

5. The system according to any preceding claim, further comprising a user interface (180) configured to activate the dosing pump and the introduction of the liquid mineral concentrate into the water flow.

6. The system according to claim 5, wherein said control unit (160) is further configured to, based on a user input via the user interface (180), control the pre-defined dose of the liquid mineral concentrate (140) to be introduced into said water flow (150) by said dosing pump (130).

7. The system according to any preceding claim, further comprising a measuring element (190) configured to measure a volume of water delivered by said tap (110) to said user.

8. The system according to claim 7, wherein said control unit is further configured to, based on at least the information from the measuring element (190), inform, via the user interface (180), said user of said mineralization state of said water flow (150).

9. The system according to claim 7, wherein said control unit (160) is further configured to, based on at least the information from the measuring element (190), inform, via the user interface (180), said user of a purification state of said water flow (150).

10. The system according to claim 5, wherein said user interface (180) further comprises indicating means to inform the user that a mineralization state of the water flow (150) has been regulated.

11. The system according to any preceding claim, wherein the liquid mineral concentrate (140) is stored in at least one container (200), and wherein the control unit (160) is further configured to inform said user via the user interface (180) when said at least one container needs refilling.

12. A method (300) for regulating a mineralization state of a water flow (150) using a system according to any one of claims 1-11, the method comprising the following steps:
a. receiving (S1) a water flow (150) from a water source (120) and,
b. controlling (S2) a dosing pump (130), to add a pre-defined dose of liquid mineral concentrate (140) to said water flow (150), thereby actively affecting the mineralization state of said water flow,
c. delivering (S3) the water flow (150) with an actively affected mineralization state to a tap (110), and
d. delivering (S4) the water flow (150) with an actively affected mineralization state from said tap (110) to a user.

13. The method of claim 12, further comprising a step after step a and prior to step b, comprising
a1. purifying (S1a) the water flow (150) through reverse osmosis.

14. The method of any one of claims 12-13, further comprising the step:
e. receiving (S1b) a user input via a user interface (180), wherein said user input comprises information about the pre-defined dose.

15. The method of any one of claims 12 to 14, further comprising the steps:
f. measuring (S1c) a volume of the water flow (150) that passes through said tap (110) to said user, and
g. informing (S4a) a user via a user interface (180) of the mineralization state of said water flow.
